# FASCICULE DE BREVET EUROPEEN

(11) **EP 0 385 857 B1**
(45) Date de publication et mention de la délivrance du brevet: **25.08.1993**
(21) Numéro de dépôt: 90400548.5
(22) Date de dépôt: 28.02.1990
(51) Int. Cl.: C01B 31/18

(54) **Procédé et installation de production de monoxyde de carbone**
Verfahren und Anlage zur Herstellung von Kohlenoxyd
Process and installation for the production of carbon monoxide

(30) Priorité: 02.03.1989 FR 8902696
(43) Date de publication de la demande: 05.09.1990
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Dupont, René, F-94130 Nogent-Sur-Marne (FR); Gauthier, Pierre, F-94260 Fresnes (FR)
(74) Mandataire: Le Moenner, Gabriel

(56) Documents cités:
- EP-A- 0 018 700
- DE-A- 2 640 456
- FR-A- 2 398 695
- GB-A- 1 551 845
- US-A- 4 431 566
- PATENT ABSTRACTS OF JAPAN, vol. 11, no. 3 (C-395)(2450), 7 janvier1987; & JP-A-61 183 101 (MITSUBISHI HEAVY IND. LTD.) 15.08.1986
- PATENT ABSTRACTS OF JAPAN, vol. 11, no. 242 (C-438)(2689), 7 août 1987; & JP-A-62 49947 (MITSUBISHI GAS CHEM. CO. LTD) 04.03.1987

## Description

La présente invention est relative à la production de monoxyde de carbone (CO) par génération d'un gaz de synthèse puis épuration de ce gaz. Par "épuration", on entend l'élimination de l'essentiel des constituants autres que le CO.

Dans les procédés habituels de production de CO, la génération du gaz de synthèse est basée sur une oxydation partielle de coke et d'hydrocarbures tel que gaz naturel, GPL, naphta, résidus sous vide, notamment par reformage à l'oxygène, à la vapeur d'eau ou au CO₂. Le gaz de synthèse est ensuite épuré, généralement par voie cryogénique ou chimique.

Ces procédés permettent d'atteindre des puretés élevées, supérieures à 99 %, mais ils mettent en oeuvre des équipements complexes mal adaptés aux unités de petite capacité.

L'invention a pour but de fournir une technique plus économique dans le cas d'unités de capacité relativement petite.

A cet effet, l'invention a pour objet un procédé du type précité, caractérisé en ce que le gaz de synthèse est obtenu par craquage catalytique de méthanol.

De préférence, l'étape d'épuration comprend une élimination des impuretés les plus légères, notamment d'hydrogène, par perméation ; dans un mode de mise en oeuvre avantageux, elle comprend successivement :
- un lavage à l'eau pour éliminer l'essentiel des impuretés les plus lourdes issues du craquage ;
- une adsorption sélective sur adsorbants pour arrêter les dernières traces de ces impuretés ; et
- ladite perméation, le résidu de cette perméation constituant la production.

L'invention a également pour objet une installation de production de monoxyde de carbone (CO), du type comprenant un appareil de génération d'un gaz de synthèse contenant du CO et un appareil d'épuration de ce gaz, caractérisée en ce que l'appareil de génération du gaz de synthèse est un appareil de craquage catalytique de méthanol.

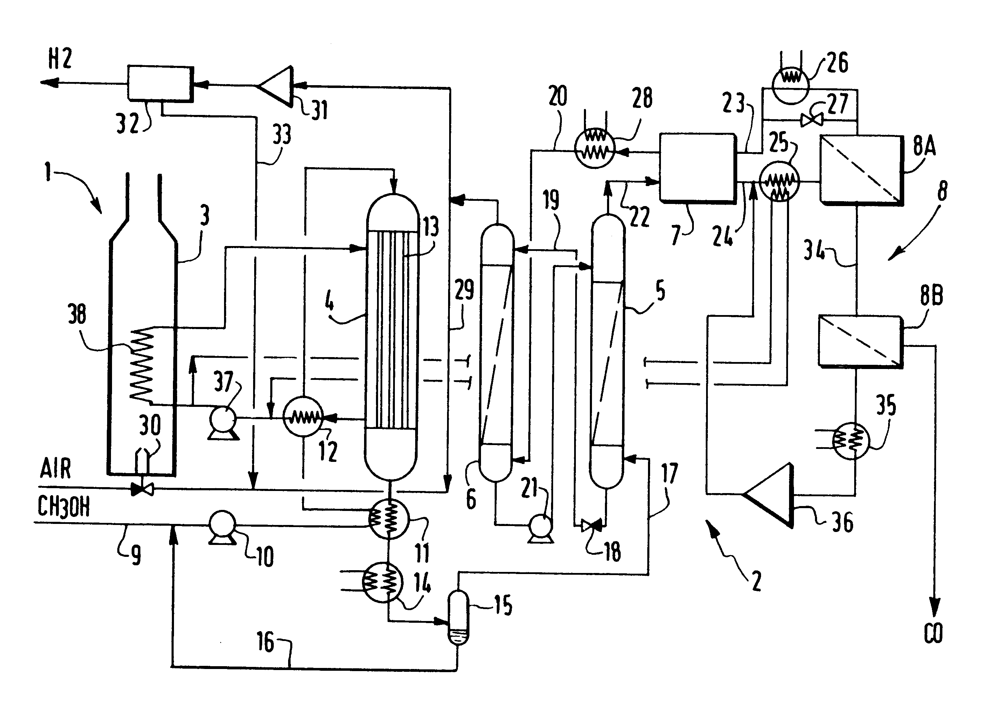

Un exemple de mise en oeuvre de l'invention va maintenant être décrit en regard du dessin annexé, sur lequel la figure unique représente schématiquement une installation conforme à l'invention.

L'installation représentée au dessin comprend un appareil 1 de craquage catalytique et un appareil 2 d'épuration du gaz de synthèse produit par cet appareil 1. L'appareil 1 comprend lui-même une enceinte 3 de chauffage d'un fluide caloporteur et une enceinte 4 de craquage. L'appareil 2 comprend une tour 5 de lavage à l'eau associée à une tour 6 de régénération de l'eau de lavage, un appareil 7 d'adsorption sélective du type TSA (Temperature Swing Adsorption), et un appareil de perméation 8. Le méthanol CH₃OH, arrivant en phase liquide par une conduite 9, est comprimé par une pompe 10 à une pression un peu supérieure à celle du CO à produire. Dans cet exemple, on produit du CO sous une pression comprise entre 25 et 30 bars, et le méthanol est comprimé à environ 30 bars, de façon à tenir compte des pertes de charge.

Le méthanol comprimé est préchauffé dans deux échangeurs de chaleur indirects 11 et 12 successifs, puis est introduit dans la chambre supérieure, formant collecteur d'entrée, de l'enceinte 4. De là, il est réparti dans un certain nombre de passages de chauffage 13 de cette enceinte, où se produit le craquage vers 350°C.

Le gaz ainsi généré est collecté dans la chambre inférieure de l'enceinte 4, puis refroidi en deux stades, d'abord dans l'échangeur 11 puis dans un échangeur indirect 14 à circulation d'eau. Ce refroidissement produit une recondensation de l'essentiel du méthanol non craqué, et la fraction liquide, recueillie dans un séparateur de phases 15, est recyclée par une conduite 16 à l'aspiration de la pompe 10. La phase vapeur issue de ce séparateur constitue un gaz de synthèse qui va ensuite être épuré et dont la composition typique est la suivante :
- H₂ 65,9 %
- CO 31,4 %
- CO₂ 1,1 %
- CH₄ 0,1 %
- (CH₃)₂0 0,4 %
- CH₃0H 1,0 %
- H₂0 0,1 %

Le gaz de synthèse est envoyé par une conduite 17 à la base de la tour 5, laquelle est alimentée à son sommet par de l'eau circulant en circuit fermé. On élimine ainsi par absorption la majeure partie du CO₂, du méthanol restant et du (CH₃)₂0. L'eau de lavage chargée de ces impuretés, soutirée en cuve de la tour, est détendue à environ 2 bars dans une vanne de détente 18 et envoyée par une conduite 19 au sommet de la tour 6, où elle est régénérée par strippage au moyen d'hydrogène impur introduit par une conduite 20 au bas de cette tour. L'eau régénérée est soutirée en cuve de la tour 6, recomprimée à 30 bars par une pompe 21 et renvoyée au sommet de la tour 5.

Le gaz de tête de la tour 5 passe ensuite, via une conduite 22, dans l'appareil d'adsorption 7. Cet appareil comprend deux adsorbeurs à fonctionnement alterné dont chacun comprend au moins un lit d'adsorbant, et par exemple deux lits en série, le premier constitué d'alumine activée et le second de charbon actif. On élimine ainsi du gaz, l'eau et les traces résiduelles de CO₂, de CH₃0H et de (CH₃)₂0. La régénération des adsorbeurs est effectuée au moyen d'hydrogène impur véhiculé par une conduite 23. Pour le fonctionnement de l'appareil 7, on peut utiliser n'importe quel cycle approprié, classique dans la technique TSA.

Le gaz sortant de l'appareil 7 par une conduite 24, constitué à peu près exclusivement de CO et d'hydrogène, est réchauffé vers 90°C dans un échangeur de chaleur indirect 25 et envoyé dans le premier étage 8A de l'appareil 8 de perméation, où la majeure partie de l'hydrogène est éliminée. Le perméat, constitué d'à peu près 95 % d'hydrogène et 5 % de CO sous environ 2 bars, est refroidi par un échangeur de chaleur indirect à eau 26 puis est utilisé pour la phase de refroidissement de l'adsorbant de l'appareil 7, ou est envoyé directement dans l'appareil 7 par un by-pass 27 de l'échangeur 26 pour la phase de chauffage de l'adsorbant. A sa sortie de l'appareil 7, cet hydrogène impur est refroidi par un échangeur de chaleur indirect à eau 28 puis envoyé, via la conduite 20, au bas de la tour de régénération 6.

En variante, comme représenté également au dessin, le gaz de tête de la tour 6 peut être valorisé, par exemple en produisant de l'hydrogène pur par compression en 31 puis purification par adsorption PSA (Pressure Swing Adsorption) en 32. Le gaz résiduaire de cette adsorption est alors renvoyé au brûleur 30 via une conduite 33 pour y être utilisé comme gaz combustible, avec si nécessaire un appoint de gaz combustible amené directement du haut de la tour 6 par la conduite 29.

Le résidu de l'étage de perméation 8A est envoyé par une conduite 34 au second étage 8B de l'appareil 8. Le perméat de ce deuxième étage, contenant environ 65 % de CO, est refroidi par un échangeur de chaleur indirect à eau 35, comprimé en 36 et recyclé dans la conduite 24, en amont de l'échangeur 25. Le résidu de l'étage 8B constitue le gaz de production de l'installation et contient comme impuretés moins de 0,4 % d'hydrogène, moins de 0,4 % de méthane et des traces de CO₂, de (CH₃)₂0, de CH₃0H et d'eau. La pureté du monoxyde de carbone produit est ainsi supérieure à 99 %.

Le fluide caloporteur (huile) servant au craquage du méthanol est mis en circulation par une pompe 37 entre un serpentin 38 situé dans l'enceinte 3 et la calandre de l'enceinte 4, via l'échangeur 12. Une partie de ce fluide est dérivée du circuit principal et sert au chauffage de l'échangeur 25.

Le gaz de synthèse dont la composition a été indiquée plus haut est particulièrement avantageux par sa faible teneur en CO₂ et en méthane (ce dernier constituant se concentrant dans le CO produit). Ce résultat favorable a pu être obtenu grâce à des catalyseurs au chrome-zinc sans cuivre, un exemple étant le catalyseur à 35,5 % de Cr₂0₃ et 64,3 % de Zn0 commercialisé sous la dénomination "KMA" par la Société Catalysts and Chemical Europe.

## Revendications

1. Procédé de production de monoxyde de carbone (CO) par génération d'un gaz de synthèse puis épuration de ce gaz, selon lequel le gaz de synthèse est obtenu par craquage catalytique de méthanol, caractérisé en ce que l'étape d'épuration comprend une élimination des impuretés les plus légères, notamment d'hydrogène, par perméation.

2. Procédé suivant la revendication 1, caractérisé en ce que l'étape d'épuration par perméation est précédée d'une étape d'élimination des impuretés les plus lourdes par lavage à l'eau suivi d'une adsorption sélective des dernières traces des dites impuretés lourdes.

3. Procédé suivant la revendication 2, caractérisé en ce qu'au moins une partie de l'hydrogène éliminé par la perméation est utilisé pour régénérer l'eau de lavage et/ou l'appareil d'adsorption et/ou comme gaz conbustible pour le craquage.

4. Procédé suivant l'une quelconque des revendications 1 - 3, caractérisé en ce que la perméation a lieu en deux stades, le perméat du second stade étant recyclé à l'entrée du premier stade.

5. Installation de production de nonoxyde de carbone (CO), du type comprenant un appareil (1) de génération d'un gaz de synthèse contenant du CO et un appareil (2) d'épuration de ce gaz, selon lequel l'appareil de génération du gaz de synthèse est un appareil de craquage catalytique de méthanol, caractérisé en ce que l'appareil (2) d'épuration comprend un appareil (8) de perméation.

6. Installation suivant la revendication 5, caractérisée en ce que l'appareil (2) d'épuration comprend, agencés en série :
- une tour (5) de lavage à l'eau ;
- un appareil (7) d'adsorption sélective ; et
- l'appareil (8) de perméation.

7. Installation suivant la revendication 6, caractérisée en ce qu'elle comprend des moyens (19,23) pour faire circuler de l'hydrogène éliminé dans l'appareil de perméation (8) dans une tour (6) de régénération de l'eau de la tour de lavage et/ou dans l'appareil (7) d'adsorption sélective et/ou dans un brûleur (30) qui fait partie de l'appareil de craquage (1).

8. Installation suivant l'une quelconque des revendications 5 à 7, caractérisée en ce que l'appareil de perméation (8) comprend deux étages (8A,8B) et des moyens pour recycler le perméat du second étage (8B) à l'entrée du premier étage (8A).

## Patentansprüche

1. Verfahren zur Herstellung von Kohlenmonoxid (CO) durch Erzeugung eines Synthesegases, anschließende Reinigung dieses Gases, nach welchem das Synthesegas durch katalytisches Cracken von Methanol erhalten wird, **dadurch gekennzeichnet,** daß die Reinigungsstufe eine Beseitigung der leichteren Verunreinigungen durch Permeation, insbesondere von Wasserstoff, beinhaltet.

2. Verfahren nach Anspruch 1, **dadurch gekennzeichnet,** daß der Reinigungsstufe durch Permeation eine Stufe für die Beseitigung der schwereren Verunreinigungen durch Waschen mit Wasser vorangeht, welcher eine selektive Adsorption der letzten Spuren dieser schweren Verunreinigungen folgt.

3. Verfahren nach Anspruch 2, **dadurch gekennzeichnet,** daß mindestens ein Teil des durch Permeation beseitigten Wasserstoffes zum Regenerieren des Waschwassers und/oder Adsorptionsapparates und/oder als brennbares Gas für das Cracken verwendet wird.

4. Verfahren nach einem der Ansprüche 1 bis 3, **dadurch gekennzeichnet,** daß die Permeation in zwei Stufen stattfindet, wobei das Permeat der zweiten Stufe zum Eingang der ersten Stufe rezykliert wird.

5. Vorrichtung zur Herstellung von Kohlenmonoxid (CO) vom Typ mit einer Vorrichtung (1) zur Herstellung eines CO enthaltenden Synthesegases und einer Vorrichtung (2) zur Reinigung dieses Gases, nach welchem die Vorrichtung zur Erzeugung des Synthesegases eine Vorrichtung für katalytisches Cracken von Methanol ist, **dadurch** **gekennzeichnet,** daß die Reinigungsvorrichtung (2) eine Permeationsvorrichtung (8) aufweist.

6. Vorrichtung nach Anspruch 5, **dadurch gekennzeichnet,** daß die Reinigungsvorrichtung (2) in Serie angeordnet, aufweist:
- einen Turm (5) zum Waschen mit Wasser,
- eine Vorrichtung (7) für selektive Adsorption und
- eine Permeationsvorrichtung (8).

7. Vorrichtung nach Anspruch 6, **dadurch gekennzeichnet,** daß sie Mittel (19, 23) aufweist, um den in der Permeationsvorrichtung (8) beseitigten Wasserstoff in einem Turm (6) für die Regenerierung des Wassers des Waschturmes und/oder in der Vorrichtung (7) für die selektive Adsorption und/oder in einem Brenner (30), der Teil der Crack-Vorrichtung (1) ist, zirkulieren zu lassen.

8. Vorrichtung nach einem der Ansprüche 5 bis 7, **dadurch gekennzeichnet,** daß die Permeationsvorrichtung (8) zwei Stufen (8A, 8B) und Mittel, um das Permeat der zweiten Stufe (8B) zum Eingang der ersten Stufe (8A) zu rezyklieren, umfaßt.

## Claims

1. Process for production of carbon monoxide (CO) by generating a synthetic gas and then scrubbing this gas, according to which the synthetic gas is obtained by catalytic cracking of methanol, characterised in that the scrubbing stage comprises a removal of the lightest impurities, in particular hydrogen, by permeation.

2. Process according to Claim 1, characterised in that the scrubbing by permeation stage is preceded by a stage of removal of the heaviest impurities by scrubbing with water followed by a selective adsorption of the last traces of the said heavy impurities.

3. Process according to Claim 2, characterised in that at least some of the hydrogen removed by the permeation is used in order to regenerate the scrubbing water and/or the adsorption apparatus and/or as fuel gas for the cracking.

4. Process according to any of Claims 1 - 3, characterised in that the permeation takes place in two stages, the permeate from the second stage being recycled to the inlet of the first stage.

5. Carbon monoxide (CO) production installation, of the type comprising an apparatus (1) for generating a synthetic gas containing CO and an apparatus (2) for scrubbing this gas, according to which the apparatus for generating the synthetic gas is an apparatus for catalytic cracking of methanol, characterised in that the scrubbing apparatus (2) comprises a permeation apparatus (8).

6. Installation according to Claim 5, characterised in that the scrubbing apparatus (2) comprises, arranged in series:
- a tower (5) for scrubbing with water;
- a selective adsorption apparatus (7); and
- the permeation apparatus (8).

7. Installation according to Claim 6, characterised in that it comprises means (19, 23) for causing the hydrogen removed in the permeation apparatus (8) to circulate in a tower (6) for regenerating the water of the scrubbing tower and/or in the selective adsorption apparatus (7) and/or in a burner (30) which forms part of the cracking apparatus (1).

8. Installation according to any of Claims 5 to 7, characterised in that the permeation apparatus (8) comprises two stages (8A, 8B) and means for recycling the permeate from the second stage (8B) to the inlet of the first stage (8A).
